# EUROPEAN PATENT APPLICATION

(11) **EP 3 081 843 A1**
(43) Date of publication of application: **19.10.2016**
(21) Application number: 16165372.0
(22) Date of filing: 14.04.2016
(51) Int. Cl.: F17C 13/04

(54) **NON-RETURN VALVE MECHANISM AND ONE-WAY VALVE DEVICE**

(30) Priority: 15.04.2015 JP 2015083307
(71) Applicant: Neriki Valve Co., Ltd., Amagasaki-shi Hyogo 661-0975 (JP)
(72) Inventor: Kagomoto, Mitsumasa, Amagasaki, Hyogo 661-0975 (JP); OI, Akira, Amagasaki, Hyogo 661-0975 (JP)
(74) Representative: von Bülow & Tamada

(57) **Abstract**

A one-way valve device, and a non-return valve mechanism mountable on a non-way valve device allow a sufficiently high rate of flow under the pressure of upstream fluid around a predetermined pressure for retaining the residual pressure. A non-return valve cassette (200) for regulating flow of gas is arranged in a third space x3 defined in a flow channel (60) of a consumption valve (1) on a downstream side (Dd) of a middle transfer member (54) in the flow channel (60). The non-return valve cassette (200) contains a check valve (230), which is movable forward and backward between a valve-open position and a valve-closed position, and moves backward toward the valve-open position under the upstream pressure. The check valve (230) includes a cylindrical valve body (231) having a communicating channel (236), which connects an upstream side (Du) and the downstream side (Dd) of the valve body (231).

## Description

### BACKGROUND OF INVENTION

### Field of the Invention

The present invention relates to a one-way valve device mountable on for example a bundle of cylinders and including a non-return valve mechanism for retaining the residual pressure, and to a non-return valve unit mountable on such a one-way valve device.

### Background Art

A valve device including a shutoff valve, which allows flow of a fluid such as a gas and is switchable between an open state and a sealed state, may also include a non-return valve unit, which regulates flow of a fluid unlike a shutoff valve. One such non-return valve unit is a residual pressure retaining valve unit, with which gas with a predetermined pressure can remain in a container (refer to Patent Literature 1).

As described in Patent Literature 1, the non-return valve unit includes a valve element, which is movable forward and backward between a valve-closed position and a valve-open position, and a pressing member, which presses the valve element toward the valve-closed position. This non-return valve unit regulates the flow of the fluid by moving the valve element forward and backward using the pressure of the fluid flowing upstream in its flow channel (upstream pressure) and the resilience of the pressing member.

In detail, as the fluid is consumed in the container with the valve device including the non-return valve unit described in Patent Literature 1 in the valve open state, the remaining amount of the fluid in the container decreases. When the upstream pressure decreases to a predetermined pressure, the valve element moves to the valve-closed position and is closed. As a result, the fluid with a predetermined pressure remains in the container.

In the valve device including the non-return valve unit described in Patent Literature 1, the resilience of the pressing member moves the valve element toward the valve-closed position when the remaining amount of the fluid in the container decreases and the upstream pressure decreases to around the predetermined pressure as described above. This will reduce the area of the flow channel, and lower the flow rate of the fluid. With an insufficient flow rate, the equipment that uses the fluid may stop operating.

### CITATION LIST

### PATENT LITERATURE

Patent Literature 1: Japanese Unexamined Patent Application Publication No. 2002-49427

### SUMMARY OF INVENTION

### TECHNICAL PROBLEM

One or more aspects of the present invention are directed to a one-way valve device that achieves a sufficiently high flow rate of fluid under the pressure of upstream fluid around a predetermined pressure for retaining the residual pressure, and to provide a non-return valve mechanism mountable on such a one-way valve device.

### SOLUTION TO PROBLEM

One aspect of the present invention provides a non-return valve mechanism mountable in a one-way valve device to regulate flow of a fluid. The one-way valve device includes a flow channel in which the fluid flows and a shutoff valve. The shutoff valve is arranged in a middle portion of the flow channel, and is switchable between an open state and a closed state. The non-return valve mechanism is mountable in a mounting space downstream from the shutoff valve in the flow channel of the one-way valve device. The non-return valve mechanism includes a regulator valve and a pressing member. The regulator valve is mountable in the mounting space in a manner movable forward and backward between a valve-closed position and a valve-open position. The regulator valve is movable backward toward the valve-open position under pressure of the fluid located upstream. The pressing member has resilience to press the regulator valve in a valve closing direction from the valve-open position toward the valve-closed position. The pressing member allows the regulator valve to move in a valve opening direction from the valve-closed position toward the valve-open position against the resilience to press the regulator valve in the valve closing direction when the pressure of the fluid located upstream is a predetermined pressure or higher. The regulator valve includes a valve body and a small-diameter insertion portion. The valve body is cylindrical and has a communicating channel connecting an upstream side and a downstream side of the valve body. The small-diameter insertion portion is cylindrical and has a smaller diameter than the valve body, and is located upstream from the valve body. The small-diameter insertion portion is to be placed into a small-diameter flow channel portion with a reduced flow channel diameter to close the regulator valve.

Another aspect of the present invention provides a one-way valve device. The one-way valve device includes a flow channel in which a fluid flows, and a shutoff valve that is arranged in a middle portion of the flow channel and is switchable between an open state and a closed state. The one-way valve device includes a non-return valve unit with the above structure for regulating flow of the fluid, which is mounted in the mounting space in the one-way valve device.

The fluid may be a gas, a liquid, or a gel.

The valve-open position may be any position at which the pressure of the upstream fluid is applied to the regulator valve and moves the regulator valve backward against the resilience of the pressing member to allow flow of the fluid. The regulator valve may not be stationary.

The one-way valve device may be, for example, a valve mountable on a pipe (a valve for a bundle), or may be a valve mountable on a container. More specifically, the one-way valve device may be mounted on a pipe connected to a bundle of cylinders, or may be mounted on a container, such as a cylinder. The one-way valve device regulates flow of fluid by allowing the flow in one direction, which may either be the direction in which the fluid is consumed or the direction in which the fluid is supplied.

The terms "upstream" and "downstream" refer to an upstream side and a downstream side in the direction of flow regulated to one direction.

The non-return valve mechanism and the one-way valve device according to the above aspects of the present invention achieve a sufficiently high rate of flow under the pressure of the upstream fluid around a predetermined pressure for retaining the residual pressure (hereinafter referred to as retaining pressure).

In detail, the non-return valve mechanism includes a regulator valve and a pressing member. The regulator valve is mountable in the mounting space in a manner movable forward and backward between a valve-closed position and a valve-open position. The regulator valve is movable backward toward the valve-open position under pressure of the fluid located upstream. The pressing member has resilience to press the regulator valve in a valve closing direction from the valve-open position toward the valve-closed position. The pressing member allows the regulator valve to move in a valve opening direction from the valve-closed position toward the valve-open position against the resilience to press the regulator valve in the valve closing direction when the pressure of the fluid located upstream is a predetermined pressure or higher. When the pressure of the fluid upstream from the regulator valve (hereinafter referred to as the upstream pressure) reaches the predetermined pressure, the resilience of the pressing member moves the regulator valve to the valve-closed position and the regulator valve is closed. As a result, the fluid with the predetermined pressure remains in the cylinders in the bundle.

At the valve-closed position, the small-diameter insertion portion of the regulator valve is placed into the small-diameter flow channel portion. As a result, the valve is closed in a reliable manner. When the regulator valve moves toward the valve-open position against the resilience of the pressing member under the upstream pressure reaching the predetermined pressure or higher, the small-diameter insertion portion is removed from the small-diameter flow channel portion to allow flow of the gas.

When the upstream pressure decreases and the resilience of the pressing member moves the regulator valve at the valve-open position to a position near the valve-closed position, the communicating channel in the valve body allows flow of the fluid, and thus provides a sufficiently large area for the flow. This structure achieves a sufficiently high rate of flow under the upstream pressure around the retaining pressure.

The term "under the upstream pressure around the retaining pressure" not only refers to conditions under which the high upstream pressure has decreased to a pressure around the retaining pressure as the fluid is consumed, but also includes conditions under which the upstream pressure has been initially around the retaining pressure.

In the above aspects of the present invention, the communicating channel may have a larger area of flow than the small-diameter flow channel portion.

The above area of flow is a cross-sectional area in which the fluid can flow in the direction orthogonal to the direction in which the fluid flows.

The non-return valve mechanism and the one-way valve device according to the above aspects of the present invention allow the fluid flowing through the small-diameter flow channel portion to flow through the communicating channel having a larger flow area than the small-diameter flow channel portion. This structure achieves a sufficiently high rate of flow under the upstream pressure around the retaining pressure.

In the above aspects of the present invention, the valve body may have an internal space whose downstream side is open and having substantially the same diameter as the small-diameter flow channel portion. The communicating channel may include a movement-direction groove and an intersecting-direction connecting portion. The movement-direction groove is circumferential and is arranged radially outwardly from the small-diameter insertion portion of the valve body. The movement-direction groove has a depth in a forward and backward movement direction of the regulator valve. The intersecting-direction connecting portion connects the movement-direction groove and the internal space in a direction intersecting with the forward and backward movement direction. The movement-direction groove has a larger area of flow in the direction intersecting with the forward and backward movement direction than the small-diameter flow channel portion. The intersecting-direction connecting portion has a larger area of flow in the direction intersecting with the forward and backward movement direction than the movement-direction groove.

The non-return valve mechanism and the one-way valve device according to the above aspects of the present invention achieve a sufficiently high rate of flow in a stable manner through the communicating channel under the upstream pressure around the retaining pressure.

In detail, the communicating channel includes a movement-direction groove and an intersecting-direction connecting portion. The movement-direction groove is circumferential and is arranged radially outwardly from the small-diameter insertion portion of the valve body. The movement-direction groove has a depth in a forward and backward movement direction of the regulator valve. The intersecting-direction connecting portion connects the movement-direction groove and the internal space in a direction intersecting with the forward and backward movement direction. This structure allows flow of fluid from the upstream side toward the downstream side of the valve body without, for example, causing the fluid to flow through the pressing member, which expands and contracts in the forward and backward movement direction.

The movement-direction groove has a larger area of flow in the direction intersecting with the forward and backward movement direction than the small-diameter flow channel portion. The intersecting-direction connecting portion has a larger area of flow in the direction intersecting with the forward and backward movement direction than the movement-direction groove. This structure achieves a sufficiently high rate of flow through the communicating channel in a stable manner under the upstream pressure around the retaining pressure.

In the above aspects of the present invention, the non-return valve mechanism may further include a cassette frame mountable in the mounting space. The cassette frame contains the regulator valve and the pressing member. The cassette frame may include the small-diameter flow channel portion.

The above aspects of the present invention allow the non-return valve mechanism to have the cassette structure, and the one-way valve device to easily achieve a sufficiently high rate of flow under the upstream pressure around the retaining pressure.

In detail, the non-return valve mechanism further includes a cassette frame containing the regulator valve and the pressing member. As a result, the non-return valve mechanism has the cassette structure.

Further, the non-return valve mechanism with the cassette structure is mounted in the mounting space to easily form the one-way valve device including the non-return valve mechanism. Further, the cassette frame includes the small-diameter flow channel portion. This structure allows, for example, a one-way valve device having a small-diameter flow channel portion with a different diameter or a one-way valve device without a small-diameter flow channel portion to have a sufficiently high rate of flow under the upstream pressure around the retaining pressure.

In the above aspects of the present invention, the non-return valve mechanism may be mountable in the mounting space in combination with a depressurizing valve and a safety valve.

In this structure, the depressurizing valve can depressurize the fluid to the predetermined pressure. The one-way valve device for high pressure fluid can retain the residual pressure at the predetermined pressure in a reliable manner, and achieves a sufficiently high rate of flow under the upstream pressure around the predetermined pressure.

### ADVANTAGEOUS EFFECTS

One or more embodiments of the present invention provide a one-way valve device that achieves a sufficiently high flow rate of fluid under the pressure of upstream fluid around a predetermined pressure for retaining the residual pressure, or a non-return valve mechanism mountable on such a one-way valve device.

### BRIEF DESCRIPTION OF THE DRAWINGS

Fig. 1 is a front view of a consumption valve;
Fig. 2 is a cross-sectional view of the consumption valve taken along line b-b in Fig. 1;
Fig. 3 is a schematic block diagram for a bundle of cylinders on which the consumption valve is mounted;
Figs. 4A and 4B are diagrams describing a combination valve mechanism;
Fig. 5 is an exploded cross-sectional view of the combination valve mechanism;
Fig. 6 is a perspective view of a non-return valve cassette;
Figs. 7A and 7B are diagrams describing the combination valve mechanism; and
Figs. 8A and 8B are enlarged cross-sectional views of combination valve mechanisms according to modifications.

### DETAILED DESCRIPTION

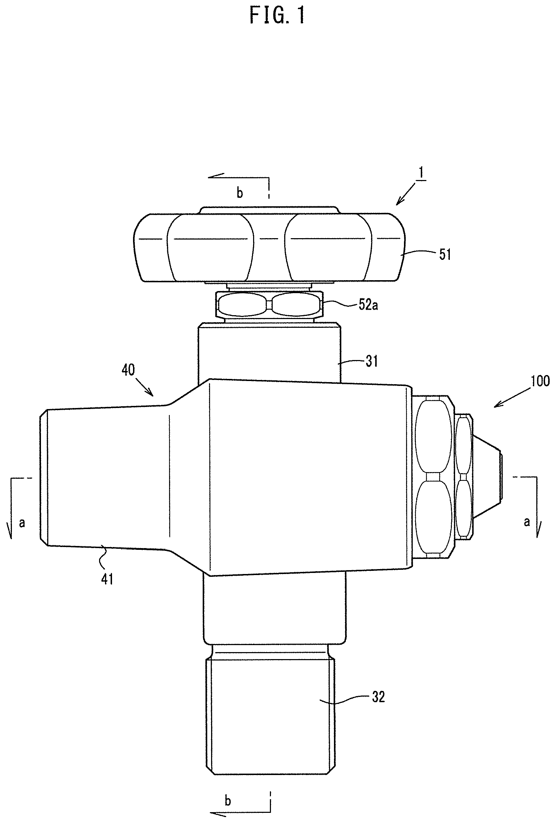

A valve 1 used for fluid consumption (consumption valve) according to one embodiment of the present invention will now be described with reference to Figs. 1 to 7B.

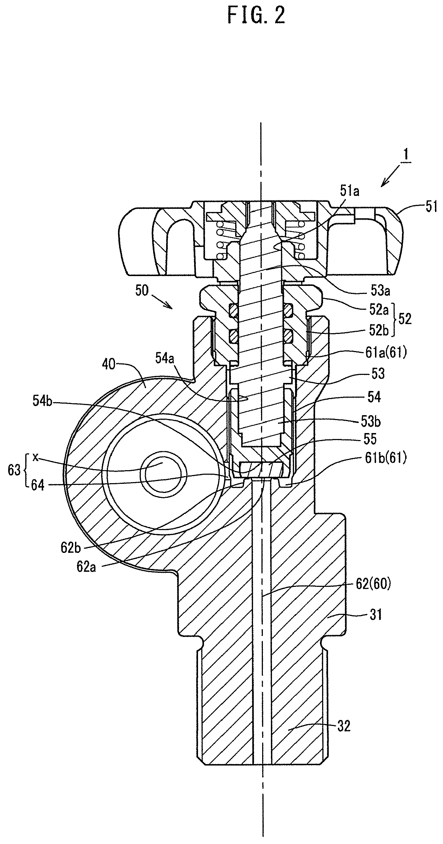

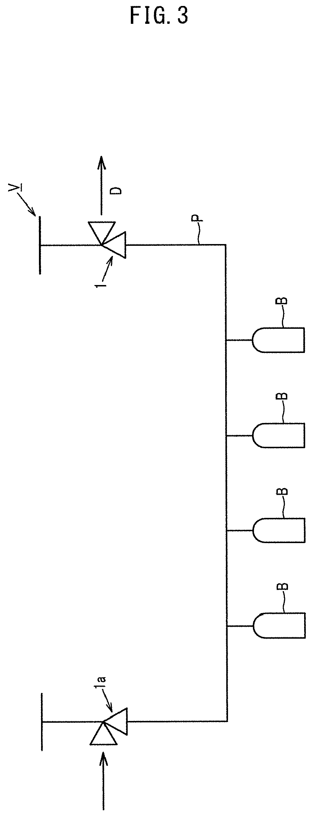

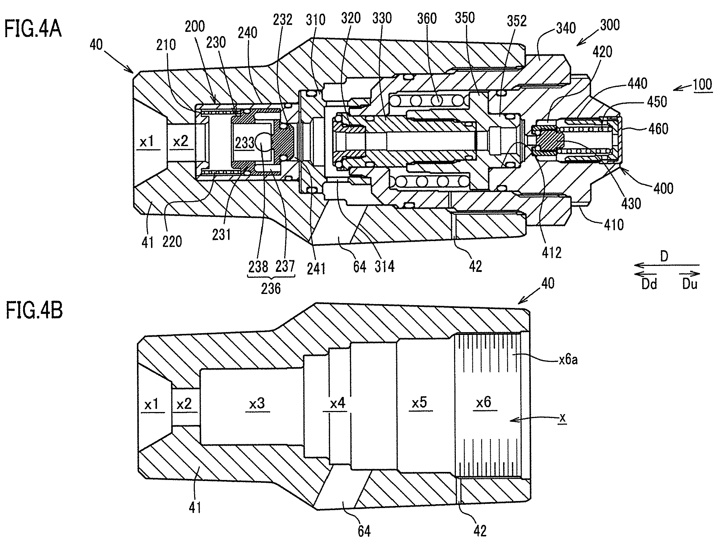

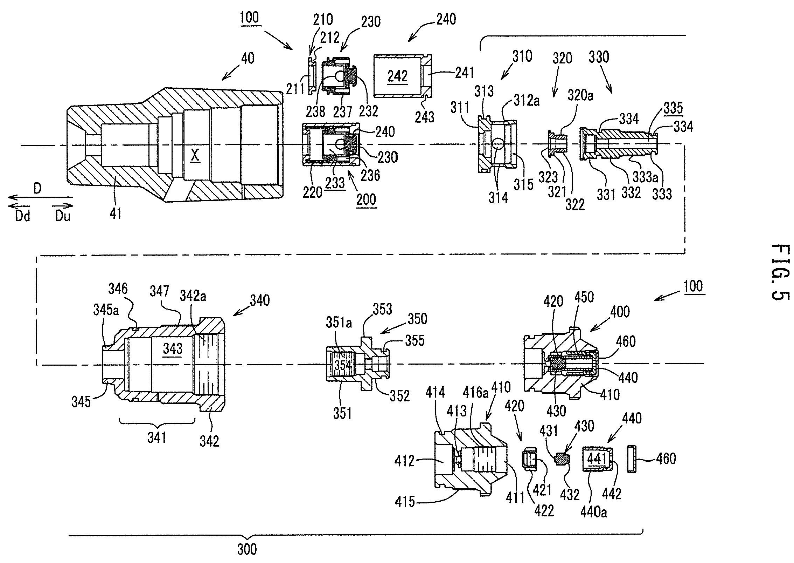

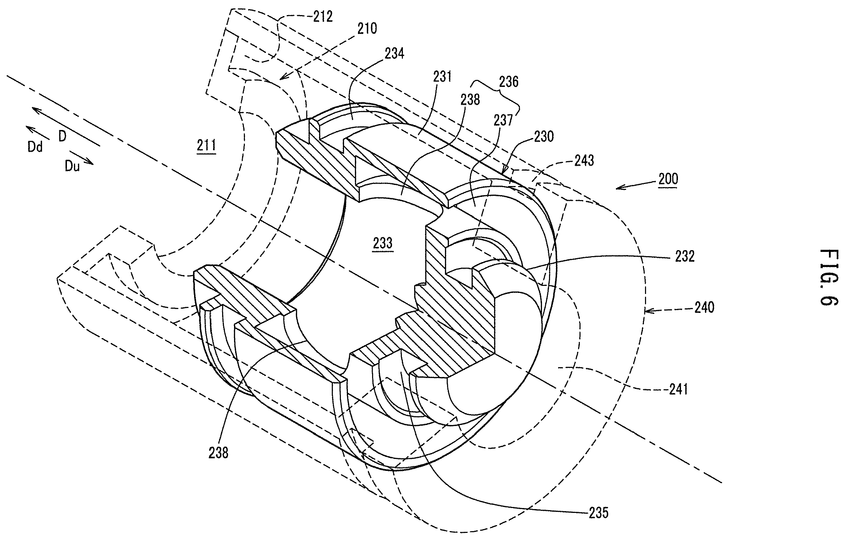

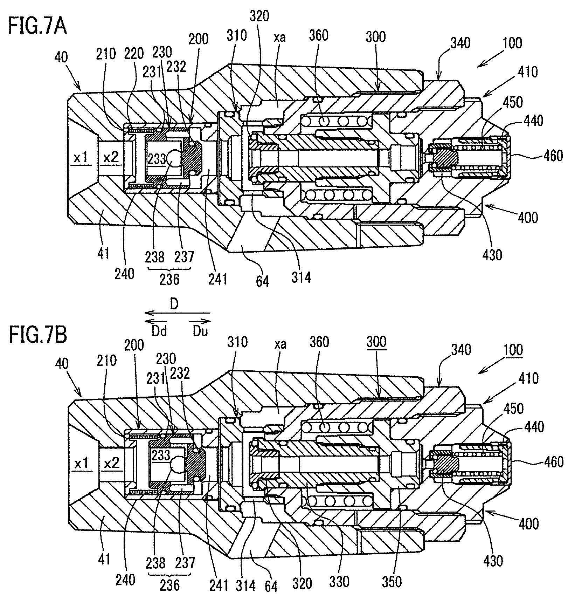

Fig. 1 is a front view of the consumption valve 1. Fig. 2 is a cross-sectional view of the consumption valve 1 taken along line b-b in Fig. 1. Fig. 3 is a schematic block diagram of a bundle V, on which the consumption valve 1 is mounted. Figs. 4A and 4B are diagrams describing a combination valve mechanism 100. Fig. 5 is an exploded cross-sectional view of the combination valve mechanism 100. Fig. 6 is a perspective view of a non-return valve cassette 200. Figs. 7A and 7B are diagrams describing the combination valve mechanism 100.

In detail, Fig. 4A is a cross-sectional view of the combination valve mechanism 100 taken along line a-a in Fig. 1. Fig. 4B is a cross-sectional view of an outlet portion 40 as viewed in the same direction as in Fig. 4A.

Fig. 7A is a cross-sectional view of the combination valve mechanism 100 in a normal consumption state in which gas is being consumed normally. Fig. 7B is a cross-sectional view of the combination valve mechanism 100 in a gas consumption state when the upstream pressure reaches around a predetermined pressure for retaining the residual pressure (retaining pressure).

In Fig. 2, the combination valve mechanism 100 mounted in a secondary flow channel x in the outlet portion (outlet inner secondary flow channel) is not shown. In Fig. 6, a front portion is cut away to show the internal structure for easy understanding.

In Fig. 5, an O-ring and a second coil spring 360 are not shown. In Fig. 6, an O-ring and a first coil spring 220 are not shown. Fig. 5 is a cross-sectional view of the non-return valve cassette 200 and a safety valve unit 400 in the assembled state, and is also a cross-sectional view showing the components in an exploded manner.

As shown in Fig. 3, the consumption valve 1 is a valve device used for fluid consumption, which is mounted on the bundle V. In detail, the consumption valve 1 is mounted on the bundle V of cylinders B on the side where the gas is consumed, together with a valve device 1a mounted on the bundle V on the side where the gas is supplied. For example, the equipment that uses the gas is connected to the consumption valve 1.

The consumption valve 1 mounted on the cylinders B on the consumption side includes a vertically long housing 31, a screw attachment portion 32, which is below the housing 31 and is screwed with and attached to a pipe p connected to the bundle V, the outlet portion 40, which is arranged in the middle of the housing 31 and protrudes sideward, and a shutoff valve mechanism 50, which is attached to the top of the housing 31.

An O-ring is mounted in an area between facing portions of the components of the shutoff valve mechanism 50 or at an appropriate position between the facing portions of the shutoff valve mechanism 50 and the housing 31. Such O-rings may not be shown and may not be described in detail.

As shown in Fig. 2, the housing 31 has a shutoff valve attachment recess 61 on its top. The shutoff valve mechanism 50 is to be mounted in the shutoff valve attachment recess 61. The housing 31 also has a primary flow channel 62, which extends from the bottom of the attachment recess 61 to and through the lower end of the screw attachment portion 32, and a secondary flow channel 63, which extends from the bottom of the shutoff valve attachment recess 61 to and through the upper end of the outlet portion 40.

The shutoff valve attachment recess 61 includes an operation chamber 61a, which is a substantially cylindrical recess and has a top opening, and a shutoff valve chamber 61 b, which is located below the operation chamber 61a and has a slightly smaller diameter than the operation chamber 61a. The primary flow channel 62 has an upper end formed through the bottom of the shutoff valve chamber 61b and thus has a top opening 62a. An opening valve seat 62b is arranged to protrude upward at the rim of the top opening 62a.

The housing 31 has a flow channel 60, which includes the shutoff valve chamber 61b, the primary flow channel 62, and the secondary flow channel 63. The flow channel 60 extends from the bottom of the screw attachment portion 32 through the upper end of the outlet portion 40.

The outlet inner secondary flow channel x, which is a part of the secondary flow channel 63 inside the outlet portion 40, and the outlet portion 40 will be described later, together with the combination valve mechanism 100.

As shown in Fig. 2, the shutoff valve mechanism 50, which is attached to the shutoff valve attachment recess 61, includes a rotational handle 51, a gland nut 52, a spindle 53, a middle transfer member 54, and a closing member 55 attached to the bottom surface of the middle transfer member 54.

The rotational handle 51 is substantially circular and has an irregularly curved outline as viewed from above, or has a wavelike outline with eight protrusions. The rotational handle 51 includes a receiving part 51 a, into which an upper fitting part 53a of the spindle 53 is to be fitted.

The gland nut 52 is hollow and substantially cylindrical. The gland nut 52 includes a head nut portion 52a, and a male thread portion 52b, which is screwed with female threads on the inner surface of the operation chamber 61a of the shutoff valve attachment recess 61.

As shown in Fig. 2, the spindle 53 includes the upper fitting part 53a, which is fitted in the receiving part 51a of the rotational handle 51, and a lower fitting recess 53b, which is fitted in a spindle receiving recess 54a of the middle transfer member 54.

As shown in Fig. 2, the middle transfer member 54 is substantially cylindrical. The middle transfer member 54 has the spindle receiving recess 54a on its upper end, into which the fitting recess 53b of the spindle 53 is to be fitted. The middle transfer member 54 also has a closing member fitting recess 54b in its lower portion, into which the closing member 55 is to be fitted.

As shown in Fig. 2, the closing member 55 is a circular elastic member as viewed from above. The closing member 55 is fitted in the closing member fitting recess 54b of the middle transfer member 54. The closing member 55 is engaged with the opening valve seat 62b when the valve is closed.

To assemble the shutoff valve mechanism 50 including the rotational handle 51, the gland nut 52, the spindle 53, the middle transfer member 54, and the closing member 55 as described above, the closing member 55 is fitted in the closing member fitting recess 54b of the middle transfer member 54, and the fitting recess 53b of the spindle 53 is fitted in the spindle receiving recess 54a of the middle transfer member 54, and the gland nut 52 is mounted on the spindle 53. The male thread portion 52b of the gland nut 52 is screwed with the female threads of the shutoff valve attachment recess 61. This assembly is then mounted in the shutoff valve attachment recess 61. The receiving part 51a of the rotational handle 51 is then fitted in the fitting part 53a of the spindle 53. This completes the assembling process of the shutoff valve mechanism 50.

The rotational handle 51 of the shutoff valve mechanism 50 with the above-described structure is rotated and screwed to push down the middle transfer member 54 via the spindle 53. As a result, the opening valve seat 62b around the top opening 62a is engaged with the closing member 55, which is fitted in the closing member fitting recess 54b of the middle transfer member 54. The closing member 55 seals the top opening 62a. This state refers to a sealed state.

When the rotational handle 51 is rotated and unscrewed, the spindle 53 is unscrewed. This moves the middle transfer member 54 upward via the spindle 53. As a result, the top opening 62a is open to allow the primary flow channel 62, the shutoff valve chamber 61b, and the secondary flow channel 63 to communicate with one another and allow the gas flow through the flow channel 60. This state refers to an open state.

The outlet portion 40, and the outlet inner secondary flow channel x, which is defined in the outlet portion 40 and is a part of the secondary flow channel 63 of the flow channel 60, will now be described with reference to Figs. 2 and 4B.

The outlet portion 40 is substantially cylindrical and extends sideward. The outlet portion 40 includes a connector unit 41, which allows connection to equipment that uses the gas (not shown). The outlet portion 40 internally has the outlet inner secondary flow channel x, which extends axially through the outlet portion 40.

Hereafter, the secondary flow channel 63 defined inside the housing 31 is referred to as a housing inner secondary flow channel 64, whereas the secondary flow channel 63 defined inside the outlet portion 40 is referred to as the outlet inner secondary flow channel x. The housing inner secondary flow channel 64 and the outlet inner secondary flow channel x form the T-shaped secondary flow channel 63 as viewed from above.

As shown in Fig. 4B, the outlet inner secondary flow channel x defines a substantially cylindrical space that extends axially through the outlet portion. The outlet inner secondary flow channel x includes a first space x1, a second space x2, a third space x3, a fourth space x4, a fifth space x5 with a large diameter, and a sixth space x6, which are formed in the stated order in the direction from where the connector unit 41 is located (from left to right in Fig. 4B).

Hereafter, the direction of the arrow shown in Figs. 4A and 4B is a consumption direction D. The upstream and the downstream in the consumption direction are an upstream side Du and a downstream side Dd.

The first space x1 accommodates a connecting portion of a pipe that is connected to the equipment that uses the gas.

The second space x2 has a smaller diameter than the first space x1. The third space x3 has a larger diameter than the second space x2. The diameter of the third space x3 is substantially as small as the diameter of the open end of the first space x1. The fourth space x4 has a larger diameter than the first space x1. The diameter of the fourth space x4 increases in a stepwise manner. The fifth space x5 has a larger diameter than the maximum diameter portion of the fourth space x4. The sixth space x6 has a larger diameter than the fifth space x5. The sixth space x6 has an open end on its back.

The fourth space x4 communicates with the housing inner secondary flow channel 64 via a circular guide flow channel xa, which will be described later. The sixth space x6 has internal threads x6a on its inner surface, which are to be screwed with external threads 347 formed on an outer circumferential surface of a front body 341 of a valve cylinder 340. The valve cylinder 340 is to be placed into the sixth space x6. Further, an overpressure release flow channel 42 extends radially and communicates with the outside through the sixth space x6 to release overpressure.

The combination valve mechanism 100 is mounted in the third space x3 and extends through the sixth space x6 of the outlet inner secondary flow channel x, and functions as a residual pressure retaining mechanism, a depressurizing mechanism, and a safety valve mechanism when the shutoff valve mechanism 50 is in an open state. The combination valve mechanism 100 will now be described with reference to Figs. 4A to 7B.

The combination valve mechanism 100, which is mounted in the outlet inner secondary flow channel x, includes the non-return valve cassette 200 and a depressurizing safety valve cassette 300, which are arranged in the stated order from the downstream side Dd toward the upstream side Du. The non-return valve cassette 200 is arranged in the third space x3. The depressurizing safety valve cassette 300 is arranged in the fourth space x4 through the sixth space x6.

The depressurizing safety valve cassette 300, which is arranged in the fourth space x4 through the sixth space x6, will now be described.

The depressurizing safety valve cassette 300 includes a circular flow channel defining ring 310, a seal seat 320, a depressurizing piston 330, the valve cylinder 340, a valve box 350, the second coil spring 360, and the safety valve unit 400, which are arranged in the stated order from the downstream side Dd toward the upstream side Du. The depressurizing safety valve cassette 300 includes O-rings in areas between facing portions of the components as appropriate. Such O-rings will not be described in detail.

The circular flow channel defining ring 310 is set along the inner circumferential surface of the fourth space x4 of the outlet inner secondary flow channel x on the downstream side Dd. The circular flow channel defining ring 310 is cylindrical, and includes a front body 311 and a rear body 312 at the back of the front body 311. The circular flow channel defining ring 310 has an internal space 315, which extends through the ring in the consumption direction D and is defined by the front body 311 and the rear body 312. The front body 311 has a ring groove 313 on its outer circumferential surface at a position facing the inner surface of the fourth space x4. An O-ring is to be fitted in the ring groove 313. The rear body 312 has four through-holes 314, which extend radially through the rear body 312. The rear body 312 has internal threads 312a on its inner surface.

The seal seat 320 receives an O-ring to be mounted on the downstream side Dd of the depressurizing piston 330. The seal seat 320 is substantially cylindrical, and includes a flange 321 on the downstream side Dd, which protrudes radially outwardly, and an insertion cylinder 322, which is placed into the depressurizing piston 330 on the downstream side Dd. The seal seat 320 has an internal through-hole 323, which extends in the consumption direction D. The seal seat 320 has external threads 320a on its outer circumferential surface on the upstream side Du.

The depressurizing piston 330 is substantially cylindrical, and includes a front body 331, into which the insertion cylinder 322 of the seal seat 320 is to be screwed, a rear body 333, which is screwed into a front body 351 of the valve box 350 (described later), and a middle body 332 arranged between the front body 331 and the rear body 333. The depressurizing piston 330 has an internal through-space 335, which extends axially through the depressurizing piston 331, and is defined by the front body 331, the rear body 333, and the middle body 332. The depressurizing piston 330 has an O-ring groove 334 on the outer circumferential surface of the middle body 332, at a backward position on the outer circumferential surface of the rear body 333, such that an O-ring is fitted in the O-ring groove 334

The front body 331 has internal threads 331a on its inner surface. The internal threads 331a are screwed with the external threads 320a of the seal seat 320. The rear body 333 has external threads 333a on its outer circumferential surface on the upstream side Du.

The seal seat 320 and the depressurizing piston 330 may be integral with each other.

The valve cylinder 340 includes the front body 341, which is placed into the outlet inner secondary flow channel x, and a rear body 342, which protrudes backward from the outlet portion 40 in the assembled state. The valve cylinder 340 is substantially cylindrical, and has an internal through-hole 343, which extends through the valve cylinder 340 in the consumption direction D.

The front body 341 includes a downstream small-diameter portion 345 on the downstream side Dd. The downstream small-diameter portion 345 is set to cover the middle body 332 of the depressurizing piston 330 in such a manner that the middle body 332 is fitted in the downstream small-diameter portion 345, and is screwed into the rear body 312 of the circular flow channel defining ring 310 from behind. The downstream small-diameter portion 345 has external threads 345a on its outer circumferential surface. The external threads 345a are to be screwed with the internal threads 312a of the circular flow channel defining ring 310. The rear body 342 has internal threads 342a on its inner surface. The internal threads 342a are screwed with external threads 415 of a valve lid 410. The front body 341 has an O-ring groove 346 on its outer circumferential surface on the downstream side Dd. An O-ring is to be fitted in the O-ring groove 346.

The front body 341 is screwed into the sixth space x6 in the outlet inner secondary flow channel x of the outlet portion 40. The front body 341 has external threads 347 on its outer circumferential surface. The external threads 347 are screwed with the internal threads x6a on the inner surface of the sixth space x6.

The valve box 350 is substantially cylindrical. The valve box 350 includes the front body 351, an insertion rear body 352, and a flange 353. The front body 351 is set to cover the rear body 333 of the depressurizing piston 330 from the upstream side Du in such a manner that the rear body 333 is fitted in the front body 351. The insertion rear body 352 is placed in a downstream recess 412 of the valve lid 410 of the safety valve unit 400 (described later). The flange 353 protrudes radially outwardly between the front body 351 and the insertion rear body 352. The valve box 350 includes an internal through-space 354, which extends through the valve box 350 in the consumption direction D.

The front body 351, into which the rear body 333 of the depressurizing piston 330 is to be placed, has internal threads 351a on its inner surface. When the rear body 333 is placed into the front body 351, the internal threads 351a are screwed with the external threads 333a of the rear body 333.

The insertion rear body 352 has an O-ring groove 355 at a backward position on its outer circumferential surface. An O-ring is to be fitted in the O-ring groove 355.

The safety valve unit 400 includes the valve lid 410, a seal seat 420, a relief valve 430, a relief valve cylinder 440, a third coil spring 450, and a cap 460.

The valve lid 410 is substantially cylindrical. The valve lid 410 is placed inside the rear body 342 of the valve cylinder 340. The valve lid 410 has the downstream recess 412 on the downstream side Dd, into which the insertion rear body 352 of the valve box 350 is to be placed.

The downstream recess 412 has a cylindrical relief space 411 on the upstream side Du, into which the seal seat 420, the relief valve 430, the relief valve cylinder 440, the third coil spring 450, and the cap 460 (described later) are to be placed. The relief space 411 and the downstream recess 412 communicate with each other in the consumption direction D via a communicating space 413 with a small diameter.

The valve lid 410 has an O-ring groove 414 on its outer circumferential surface on the downstream side Dd. An O-ring is to be fitted in the O-ring groove 414. The valve lid 410 has the external threads 415 on its outer surface. The external threads 415 are screwed with the internal threads 342a on the inner surface of the rear body 342. The valve lid 410 has internal threads 416 on its inner surface. The internal threads 416 are screwed with external threads 440a of the relief valve cylinder 440, which will be described later.

The seal seat 420 is cylindrical and has a bottom, and is open on the upstream side Du, where the seal seat 420 is set to cover a portion of the relief valve 430 on the downstream side Dd (described later) in such a manner that the downstream side portion of the relief valve 430 is fitted in the seal seat 420. The seal seat 420 has an insertion hole 421, which receives a downstream protrusion 431 of the relief valve 430. The seal seat 420 further has four overpressure gas flow channels 422, which are arranged in the circumferential direction on its outer circumferential surface. The overpressure gas flow channels 422 allow flow of overpressure gas.

The relief valve 430 is cylindrical, and is placed into the seal seat 420. The relief valve 430 includes the downstream protrusion 431 on the downstream side Dd, which is placed into the insertion hole 421. The relief valve 430 has an outer fitting groove 432 on the upstream side Du, on which the third coil spring 450 is to be set.

On the seal seat 420 in which the relief valve 430 is fitted, an O-ring is set between the insertion hole 421 and the downstream protrusion 431 in such a manner that the O-ring is exposed.

In some embodiments, the seal seat 420 and the relief valve 430 may be integral with each other.

The relief valve cylinder 440 is cylindrical and has a bottom, and is open on the downstream side Dd where the relief valve cylinder 440 has an accommodating space 441. The accommodating space 441 can accommodate the seal seat 420, the relief valve 430, and the third coil spring 450. The relief valve cylinder 440 has a gas flow hole 442 on the upstream side Du, which allows flow of overpressure gas. The relief valve cylinder 440 has the external threads 440a on its outer circumferential surface. The external threads 440a are screwed with the internal threads 416 of the valve lid 410.

The cap 460 is a circular resin cap, which is pressed into an end of the valve lid 410 on the upstream side Du.

The third coil spring 450, and the seal seat 420 and the relief valve 430 that have been joined together with the O-ring between them are placed into the relief valve cylinder 440 from the downstream side Dd. This relief valve cylinder 440 is then placed into the relief space 411 of the valve lid 410. The internal threads 416 and the external threads 440a are then screwed together. In this manner, the components of the safety valve unit 400 described above are integrated together.

In this structure, the resilience of the third coil spring 450 presses the seal seat 420 and the relief valve 430 to the downstream side Dd in the relief space 411 against the reaction force applied from the relief valve cylinder 440.

The seal seat 320 and the depressurizing piston 330 integrated together are placed into the valve cylinder 340 from the downstream side Dd, whereas the second coil spring 360 and the valve box 350 integrated together are placed into the valve cylinder 340 from the upstream side Du. As a result, the valve cylinder 340 is held between these components. The circular flow channel defining ring 310 is then mounted on this assembly from the downstream side Dd.

The safety valve unit 400 is then mounted on this assembly by placing the insertion rear body 352 of the valve box 350 into the downstream recess 412 of the valve lid 410. The cap 460 is then pressed into the end of the valve lid 410 on the upstream side Du. This completes the assembling process of the depressurizing safety valve cassette 300. The external threads 415 of the valve lid 410 in the safety valve unit 400 are screwed with the internal threads 342a of the valve cylinder 340 to integrate the valve cylinder 340 and the safety valve unit 400 together.

In this structure, the resilience of the second coil spring 360 presses the seal seat 320, the depressurizing piston 330, and the valve box 350 to the downstream side Dd against the reaction force applied from the safety valve unit 400, which is integral with the valve cylinder 340.

The non-return valve cassette 200, which is placed into the third space x3, will now be described.

The non-return valve cassette 200 includes a valve lid 210, the first coil spring 220, a check valve 230, and a check valve holder 240.

The valve lid 210 is a circular plate, which is pressed into an end of the check valve holder 240 on the downstream side Dd (described later) and holds an end of the first coil spring 220 on the downstream side Dd. The valve lid 210 has a central through-hole 211. The valve lid 210 also has a coil mounting groove 212 along its outer circumference on the upstream side Du. The first coil spring 220 is to be set in the coil mounting groove 212.

The valve lid 210 may be integral with the check valve holder 240, which will be described later.

The check valve 230 includes a valve body 231, which is cylindrical and has a bottom, and is open on the downstream side Dd. The check valve 230 also includes a small-diameter insertion portion 232 with a small diameter, which protrudes to the upstream side Du of the valve body 231. The valve body 231 has a cylindrical internal space 233. The valve body 231 has an O-ring groove 234 on its outer circumference, in which an O-ring is to be fitted. The small-diameter insertion portion 232 has an O-ring groove 235 on its outer circumference, in which an O-ring is to be fitted.

The check valve 230 has a communicating channel 236, which connects the upstream side Du and the downstream side Dd of the check valve 230. The communicating channel 236 includes a circumferential communicating channel 237 and radial communication holes 238. The communicating channel 237 is a circumferential groove extending from an end face of the valve body 231 on the upstream side Du toward the downstream side Dd. The radial communicating holes 238 are through-holes that communicate with and extend radially from the circumferential communicating channel 237 and communicate with the internal space 233.

The circumferential communicating channel 237 has a depth of at least half the depth of the valve body 231. The circumferential communicating channel 237 has a larger diameter than the small-diameter insertion portion 232. More specifically, the circumferential communicating channel 237 has an inner diameter slightly larger than the outer diameter of the small-diameter insertion portion 232, and has an outer diameter slightly smaller than the outer diameter of the valve body 231.

As a result, the cross-sectional area (area of flow) of the circumferential communicating channel 237 in a direction orthogonal to the consumption direction D is larger than the cross-sectional area (area of flow) of the small-diameter insertion portion 232, which has substantially the same diameter as a small-diameter through-hole 241 of the check valve holder 240 (described later).

The communicating channel 236 has four radial communicating holes 238 arranged in the circumferential direction. The total area (area of flow) of the four radial communicating holes 238 is larger than the cross-sectional area of the circumferential communicating channel 237.

The check valve holder 240 is cylindrical and has a bottom, and is open on the downstream side Dd. The check valve holder 240 has a small-diameter through-hole 241 on the upstream side Du, into which the small-diameter insertion portion 232 is to be placed. The check valve holder 240 has an internal accommodating space 242, which accommodates the first coil spring 220 and the check valve 230.

The accommodating space 242 has substantially the same diameter as the valve body 231 of the check valve 230. The small-diameter through-hole 241 has substantially the same diameter as the small-diameter insertion portion 232. The check valve holder 240 has an O-ring groove 243 on its outer circumference on the upstream side Du. An O-ring is to be fitted in the O-ring groove 243.

The non-return valve cassette 200 with the above-described structure accommodates the check valve 230 and the first coil spring 220 in the stated order from the downstream side Dd. On the downstream side Dd of the first coil spring 220, the valve lid 210 is pressed into the end of the check valve holder 240 on the downstream side Dd.

In this structure, the first coil spring 220 presses the check valve 230 to the upstream side Du against the reaction force applied from the valve lid 210. As a result, the small-diameter insertion portion 232 of the check valve 230 is placed into the small-diameter through-hole 241 of the check valve holder 240.

The non-return valve cassette 200 and the depressurizing safety valve cassette 300 are assembled together in this manner. The non-return valve cassette 200 is then placed in the third space x3 of the outlet inner secondary flow channel x from the upstream side Du. The depressurizing safety valve cassette 300 is further placed in the fourth space x4 through the sixth space x6.

In this structure, the external threads 347 of the depressurizing safety valve cassette 300 are screwed with the internal threads x6a on the inner surface of the sixth space x6. This integrates the depressurizing safety valve cassette 300 with the outlet inner secondary flow channel x. The depressurizing safety valve cassette 300, which is integral with the outlet inner secondary flow channel x, fixes the non-return valve cassette 200 in the third space x3. This completes the combination valve mechanism 100.

With this assembling process, the outer circumferential surface of the rear body 312 of the circular flow channel defining ring 310 with the front body 311 placed in the fourth space x4, the front surface of the front body 341 of the valve cylinder 340, and the inner circumferential surfaces of the fourth space x4 and the fifth space x5 define the circular guide flow channel xa, which connects the outlet inner secondary flow channel x and the housing inner secondary flow channel 64.

The combination valve mechanism 100 mounted in the outlet inner secondary flow channel x shown in Fig. 4A is in the state described below. As described above, the small-diameter insertion portion 232 of the non-return valve cassette 200, which is pressed by the first coil spring 220 to the upstream side Du, is placed in the small-diameter through-hole 241 of the check valve holder 240 placed in the third space x3. The insertion rear body 352 of the valve box 350, which is pressed by the second coil spring 360 to the upstream side Du, is placed in the downstream recess 412 of the valve lid 410. As a result, the combination valve mechanism 100 is in a valve closed state (initial state).

In the initial state (or at a valve-closed position) shown in Fig. 4A, the rotational handle 51 is rotated and unscrewed, and the spindle 53 is unscrewed. As a result, the combination valve mechanism 100 is in an open state. This allows the gas contained in the cylinders in the bundle V to flow through the primary flow channel 62, the shutoff valve chamber 61b, and the secondary flow channel 63, and flow into the circular guide flow channel xa via the housing inner secondary flow channel 64. The gas flowing into the circular guide flow channel xa flows through the through-holes 314 of the circular flow channel defining ring 310 and flows into the depressurizing safety valve cassette 300.

The gas flowing into the depressurizing safety valve cassette 300 flows through the through-hole 323, the through-space 335, and the through-space 354 of the seal seat 320, the depressurizing piston 330, and the valve box 350 at a valve-open position, and then reaches the downstream recess 412.

When the pressure of the gas reaching the downstream recess 412 is greater than the resilience of the second coil spring 360 pressing the components toward the upstream side Du, the seal seat 320, the depressurizing piston 330, and the valve box 350 move to the downstream side Dd against the resilience of the second coil spring 360, and reach the valve-open position.

The gas pressure causes such movement of the seal seat 320, the depressurizing piston 330, and the valve box 350 between the downstream side Dd and the upstream side Du to repeat at high speed. As a result, the gas flows from the circular guide flow channel xa into the fourth space x4. The area difference between these spaces lowers the gas pressure to a predetermined pressure. In this manner, the depressurizing safety valve cassette 300 functions as a depressurizing valve mechanism.

The pressure of the depressurized gas flowing into the fourth space x4 further moves the check valve 230 at the valve-closed position, where the small-diameter insertion portion 232 is placed into the small-diameter through-hole 241, to the downstream side Dd against the resilience of the first coil spring 220. As a result, the check valve 230 is at the valve-open position to allow flow of the gas from the second space x2 and the first space x1 for consumption (consumption state: refer to Fig. 7A).

If the pressure of the gas flowing into the depressurizing safety valve cassette 300 is excessively high (overpressure state) in the consumption state, the seal seat 420 and the relief valve 430, which are pressed to the downstream side Dd by the third coil spring 450 to seal the communicating space 413, are allowed to move to the upstream side Du against the resilience of the third coil spring 450. This allows the gas to flow through the gas flow hole 442 and to be released from the relief space 411 of the valve lid 410 on the upstream side Du.

In the above consumption state, the rotational handle 51 may be rotated and screwed and the spindle 53 may be screwed to enter the sealed state, in which the gas stops flowing into the outlet inner secondary flow channel x via the housing inner secondary flow channel 64 and the circular guide flow channel xa. With the procedure reverse to the procedure described above, the combination valve mechanism 100 returns to the initial state shown in Fig. 4A. In other words, the combination valve mechanism 100 returns to the valve-open position, whereas the check valve 230 returns to the valve-closed position.

In the consumption state, when the gas in the bundle V is consumed continuously, the remaining amount of the gas in the bundle V decreases and the pressure decreases.

As the pressure of the gas in the bundle V decreases, the gas pressure is applied directly to the non-return valve cassette 200 without the gas being depressurized by the depressurizing safety valve cassette 300, or in other words, while the depressurizing safety valve cassette 300 is at the valve-closed position. When the pressure (upstream pressure) of the gas (upstream gas) applied to the non-return valve cassette 200 decreases to the pressure for retaining the residual pressure, or to the retaining pressure, the pressing force applied by the first coil spring 220 moves the check valve 230 to the upstream side Du, and the small-diameter insertion portion 232 is placed into the small-diameter through-hole 241. As a result, the valve enters the sealed state. In other words, the non-return valve cassette 200 returns to the initial state shown in Fig. 4A. In this state, the non-return valve cassette 200 retains the residual pressure, or the gas with the retaining pressure remains in the bundle V.

In this consumption state, the pressure in the bundle V decreases, and the upstream pressure applied to the non-return valve cassette 200 decreases. When the upstream pressure approaches the retaining pressure before the non-return valve cassette 200 returns to the initial state, the resilience of the first coil spring 220 moves the check valve 230 to the upstream side Du. As a result, the small-diameter insertion portion 232 may approach the small-diameter through-hole 241 and lower the flow rate of the gas.

However, the check valve 230 has the communicating channel 236, which allows a sufficiently high rate of gas flow from the second space x2 and the first space x1 through the circumferential communicating channel 237, which has a larger cross-sectional area than the small-diameter through-hole 241, the radial communicating holes 238, which have a larger total cross-sectional area than the circumferential communicating channel 237, and through the internal space 233.

In this manner, the non-return valve cassette 200 is placed in the third space x3 of the flow channel 60 of the consumption valve 1 to regulate flow of the gas. The non-return valve cassette 200 includes the check valve 230, which is movable between the valve-closed position and the valve-open position, and moves backward toward the valve-open position under the upstream pressure. The non-return valve cassette 200 also includes the first coil spring 220, which has the resilience to press the check valve 230 in the valve closing direction from the valve-open position toward the valve-closed position. The first coil spring 220 allows the check valve 230 to move in the valve opening direction from the valve-closed position toward the valve-open position against the resilience to press the check valve 230 in the valve closing direction when the pressure of the upstream gas is a predetermined pressure or higher. The check valve 230 includes the cylindrical valve body 231, and the small-diameter insertion portion 232 arranged on the upstream side Du of the valve body 231. The small-diameter insertion portion 232 is cylindrical and has a smaller diameter than the valve body 231. The small-diameter insertion portion 232 is placed into the small-diameter through-hole 241 with a reduced flow channel diameter. This closes the valve. The valve body 231 includes the communicating channel 236, which connects the upstream side Du and the downstream side Dd of the valve body 231. The non-return valve cassette 200 thus achieves a sufficiently high rate of flow under the upstream pressure around the retaining pressure.

In detail, the third space x3 contains the check valve 230, which is movable between the valve-closed position and the valve-open position, and moves backward toward the valve-open position under the upstream pressure, and the first coil spring 220, which has the resilience to press the check valve 230 in the valve closing direction from the valve-open position toward the valve-closed position. The first coil spring 220 allows the check valve 230 to move in the valve opening direction from the valve-closed position toward the valve-open position against the resilience to press the check valve 230 in the valve closing direction when the pressure of the upstream gas is a predetermined pressure or higher. When the pressure of the upstream gas (upstream pressure), which is upstream from the check valve 230, reaches the predetermined pressure, the resilience of the first coil spring 220 moves the check valve 230 to the valve-closed position, and the check valve 230 is closed. As a result, the gas with the predetermined pressure remains in the cylinders B in the bundle V.

At the valve-closed position, the small-diameter insertion portion 232 of the check valve 230 is placed into the small-diameter through-hole 241. As a result, the valve is closed in a reliable manner. When the check valve 230 moves toward the valve-open position under the upstream pressure reaching the predetermined pressure or higher against the resilience of the first coil spring 220, the small-diameter insertion portion 232 is removed from the small-diameter through-hole 241 to allow flow of the gas.

When the upstream pressure decreases and the resilience of the first coil spring 220 moves the check valve 230 at the valve-open position to a position near the valve-closed position, the communicating channel 236 in the valve body 231 allows flow of the gas, and thus provides a sufficiently large area for the flow. This structure achieves a sufficiently high rate of flow under the upstream pressure around the retaining pressure.

With the communicating channel 236 having a larger flow area than the small-diameter through-hole 241, the gas flowing through the small-diameter through-hole 241 flows through the communicating channel 236 with a larger flow area. This structure achieves a sufficiently high rate of flow under the upstream pressure around the retaining pressure.

The valve body 231 has the internal space 233, which is open on the downstream side Dd, and has substantially the same diameter as the small-diameter through-hole 241. The communicating channel 236 includes the circumferential communicating channel 237 and the radial communicating holes 238. The circumferential communicating channel 237 is circumferential, and is arranged radially outwardly from the small-diameter insertion portion 232 of the valve body 231. The circumferential communicating channel 237 has a depth in the consumption direction D. The radial communicating holes 238 radially connect the circumferential communicating channel 237 and the internal space 233 in a direction intersecting with the consumption direction D. The circumferential communicating channel 237 has a larger flow area than the small-diameter through-hole 241. The radial communicating holes 238 have a larger flow area in a direction orthogonal to the consumption direction D than the circumferential communicating channel 237. This structure allows the communicating channel 236 to have a sufficiently high rate of flow in a stable manner under the upstream pressure around the retaining pressure.

In detail, the communicating channel 236 includes the circumferential communicating channel 237, which is circumferential and is arranged radially outwardly from the small-diameter insertion portion 232 of the valve body 231 and has a depth in the consumption direction D, and the radial communicating holes 238, which radially connect the circumferential communicating channel 237 and the internal space 233 in the direction intersecting with the consumption direction D. This structure allows flow of gas from the upstream side Du toward the downstream side Dd of the valve body 231 without, for example, causing the gas to flow through the first coil spring 220, which expands and contracts in the consumption direction D.

Further, the circumferential communicating channel 237 has a larger area of flow in the direction orthogonal to the consumption direction D than the small-diameter through-hole 241, and the radial communicating holes 238 have a larger area of flow in the radial direction than the circumferential communicating channel 237. This structure allows a sufficiently high rate of flow through the communicating channel 236 in a stable manner under the upstream pressure around the retaining pressure.

This structure further includes the check valve holder 240, which is mounted in the third space x3 and includes the accommodating space 242 accommodating the check valve 230 and the first coil spring 220. The check valve holder 240 has the small-diameter through-hole 241. This achieves the cassette structure, and easily forms the consumption valve 1, which has a sufficiently high rate of flow under the upstream pressure around the retaining pressure.

In detail, the check valve holder 240 includes the accommodating space 242 accommodating the check valve 230 and the first coil spring 220. As a result, the non-return valve cassette 200 has the cassette structure.

The non-return valve cassette 200 with the cassette structure is mounted in the third space x3 to easily form the consumption valve 1 including the non-return valve cassette 200. Further, the check valve holder 240 has the small-diameter through-hole 241. This structure allows, for example, a valve device having a small-diameter through-hole with a different diameter or a valve device without a small-diameter through-hole to have a sufficiently high rate of flow under the upstream pressure around the retaining pressure.

The combination valve mechanism 100 includes the depressurizing safety valve cassette 300 including the safety valve unit 400 arranged in the outlet inner secondary flow channel x together with the non-return valve cassette 200. In this structure, the depressurizing safety valve cassette 300 can depressurize the gas to the predetermined pressure. The consumption valve 1 for high pressure fluid can retain the residual pressure at the predetermined pressure in a reliable manner, and achieves a sufficiently high rate of flow under the upstream pressure around the predetermined pressure.

The correspondence between the components described in the above embodiments and the claimed elements will now be described. The gas corresponds to a fluid of the present invention. The middle transfer member 54 corresponds to a shutoff valve. The consumption valve 1 corresponds to a one-way valve device. The non-return valve cassette 200 corresponds to a non-return valve mechanism and a non-return valve unit. The outlet inner secondary flow channel x or the third space x3 corresponds to a mounting space. The check valve 230 corresponds to a regulator valve. The first coil spring 220 corresponds to a pressing member. The small-diameter through-hole 241 corresponds to a small-diameter flow channel portion. The consumption direction D corresponds to a forward and backward movement direction. The circumferential communicating channel 237 corresponds to a movement-direction groove. The radial communicating holes 238 correspond to an intersecting-direction connecting portion. The check valve holder 240 corresponds to a cassette frame. The depressurizing safety valve cassette 300 corresponds to a depressurizing valve. The invention is not limited to the embodiments described above. These embodiments may be modified variously.

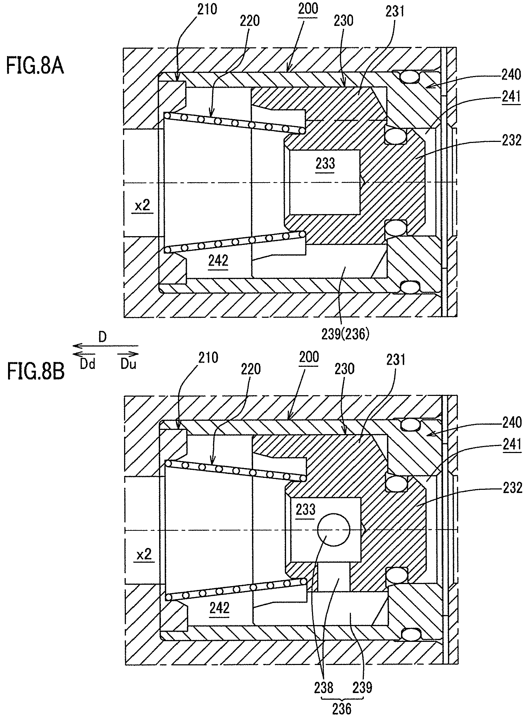

As described above, for example, the communicating channel 236 in the check valve 230 is defined by the circumferential communicating channel 237 in the consumption direction D and the radial communicating holes 238 in the radial direction. As shown in Fig. 8A, the communicating channel 236 may include a plurality of communicating grooves 239 extending in the consumption direction D on the outer circumference of the valve body 231. In this case, the communicating grooves 239 are formed to have a larger cross-sectional area than the small-diameter through-hole 241.

As shown in Fig. 8B, the communicating channel 236 may be defined by the communicating grooves 239 and the plurality of radial communicating holes 238, which radially connect the communicating grooves 239 and the internal space 233. In this case, the radial communicating holes 238 are formed to have a larger cross-sectional area than the communicating grooves 239.

In this manner as shown in Figs. 8A and 8B, the communicating channel 236 may include the communicating grooves 239, which connect the upstream side Du and the downstream side Dd of the check valve 230. This structure produces the same advantageous effects as the non-return valve cassette 200 including the communicating channel 236, which is defined by the circumferential communicating channel 237 and the radial communicating holes 238.

However, as shown in Figs. 4A and 8B, the communicating channel 236 including the radial communicating holes 238 does not allow flow of gas through the first coil spring 220, which expands and contracts in the consumption direction D. As a result, the communicating channel 236 including the radial communicating holes 238 allows flow of the gas in a more stable manner than the communicating channel 236 (Fig. 8A) without the radial communicating holes 238.

Although the gas is used as a fluid, the fluid may be a liquid or a gel.

As described above, although the consumption valve 1 is mounted on the pipe p connected to the bundle V, the consumption valve 1 may be mounted directly on the cylinders B.

Although the radial communicating holes 238 are through-holes extending in a direction orthogonal to the consumption direction D in the above embodiments, the radial communicating holes 238 may be through-holes extending in any direction intersecting with the consumption direction D.

Although the above embodiments describe the consumption valve 1 including the combination valve mechanism 100 as a valve device for fluid consumption, the valve device including the combination valve mechanism 100 may be a valve device for supplying a fluid.

### REFERENCE SIGNS LIST

- 1: consumption valve
- 54: middle transfer member
- 60: flow channel
- 200: non-return valve cassette
- 220: first coil spring
- 230: check valve
- 231: valve body
- 232: small-diameter insertion portion
- 233: internal space
- 236: communicating channel
- 237: circumferential communicating channel
- 238: radial communicating hole
- 240: check valve holder
- 241: small-diameter through-hole
- 300: depressurizing safety valve cassette
- 400: safety valve unit
- D: consumption direction
- Dd: downstream side
- Du: upstream side
- x3: third space

## Claims

1. A non-return valve mechanism mountable on a one-way valve device to regulate flow of a fluid, the one-way valve device including a flow channel in which the fluid flows and a shutoff valve arranged in a middle portion of the flow channel and switchable between an open state and a closed state,
the non-return valve mechanism being mountable in a mounting space downstream from the shutoff valve in the flow channel of the one-way valve device,
the non-return valve mechanism comprising:
a regulator valve mountable in the mounting space in a manner movable forward and backward between a valve-closed position and a valve-open position, the regulator valve being movable backward toward the valve-open position under pressure of the fluid located upstream; and
a pressing member having resilience to press the regulator valve in a valve closing direction from the valve-open position toward the valve-closed position, the pressing member being configured to allow the regulator valve to move in a valve opening direction from the valve-closed position toward the valve-open position against the resilience to press the regulator valve in the valve closing direction when the pressure of the fluid located upstream is a predetermined pressure or higher,
wherein the regulator valve includes
a valve body that is cylindrical and has a communicating channel connecting an upstream side and a downstream side of the valve body, and
a small-diameter insertion portion that is cylindrical and has a smaller diameter than the valve body, and is located upstream from the valve body, and the small-diameter insertion portion is configured to be placed into a small-diameter flow channel portion with a reduced flow channel diameter to close the regulator valve.

2. The non-return valve mechanism according to claim 1, wherein
the communicating channel has a larger area of flow than the small-diameter flow channel portion.

3. The non-return valve mechanism according to claim 2, wherein
the valve body has an internal space whose downstream side is open and having substantially the same diameter as the small-diameter flow channel portion, and
the communicating channel includes
a movement-direction groove that is circumferential and is arranged radially outwardly from the small-diameter insertion portion of the valve body, and
the movement-direction groove has a depth in a forward and backward movement direction of the regulator valve; and
an intersecting-direction connecting portion that connects the movement-direction groove and the internal space in a direction intersecting with the forward and backward movement direction,
wherein the movement-direction groove has a larger area of flow in the direction intersecting with the forward and backward movement direction than the small-diameter flow channel portion, and the intersecting-direction connecting portion has a larger area of flow in the direction intersecting with the forward and backward movement direction than the movement-direction groove.

4. The non-return valve mechanism according to any one of claims 1 to 3, further comprising:
a cassette frame mountable in the mounting space, the cassette frame containing the regulator valve and the pressing member,
wherein the cassette frame includes the small-diameter flow channel portion.

5. The non-return valve mechanism according to any one of claims 1 to 4, wherein
the non-return valve mechanism is mountable in the mounting space in combination with a depressurizing valve and a safety valve.

6. A one-way valve device, comprising:
a flow channel in which a fluid flows;
a shutoff valve arranged in a middle portion of the flow channel, the shutoff valve being switchable between an open state and a closed state; and
a non-return valve unit configured to regulate flow of the fluid, the non-return valve unit being mounted in a mounting space downstream from the shutoff valve in the flow channel,
the non-return valve unit including
a regulator valve mounted in the mounting space in a manner movable forward and backward between a valve-closed position and a valve-open position, the regulator valve being movable backward toward the valve-open position under pressure of the fluid located upstream, and
a pressing member having resilience to press the regulator valve in a valve closing direction from the valve-open position toward the valve-closed position, the pressing member being configured to allow the regulator valve to move in a valve opening direction from the valve-closed position toward the valve-open position against the resilience to press the regulator valve in the valve closing direction when the pressure of the fluid located upstream is a predetermined pressure or higher,
wherein the regulator valve includes
a valve body that is cylindrical and has a communicating channel connecting an upstream side and a downstream side of the valve body, and
a small-diameter insertion portion that is cylindrical and has a smaller diameter than the valve body, and is located upstream from the valve body, and the small-diameter insertion portion is configured to be placed into a small-diameter flow channel portion with a reduced flow channel diameter to close the regulator valve.

7. The one-way valve device according to claim 6, wherein
the communicating channel has a larger area of flow than the small-diameter flow channel portion.

8. The one-way valve device according to claim 7, wherein
the valve body has an internal space whose downstream side is open and having substantially the same diameter as the small-diameter flow channel portion, and
the communicating channel includes
a movement-direction groove that is circumferential and is arranged radially outwardly from the small-diameter insertion portion of the valve body, and the movement-direction groove has a depth in a forward and backward movement direction of the regulator valve, and
an intersecting-direction connecting portion that connects the movement-direction groove and the internal space in a direction intersecting with the forward and backward movement direction, and
the movement-direction groove has a larger area of flow in the direction intersecting with the forward and backward movement direction than the small-diameter flow channel portion, and the intersecting-direction connecting portion has a larger area of flow in the direction intersecting with the forward and backward movement direction than the movement-direction groove.

9. The one-way valve device according to any one of claims 6 to 8, further comprising:
a cassette frame mounted in the mounting space, the cassette frame containing the regulator valve and the pressing member,
wherein the cassette frame includes the small-diameter flow channel portion.

10. The one-way valve device according to any one of claims 6 to 9, wherein the non-return valve unit is mounted in the mounting space in combination with a depressurizing valve and a safety valve.
